# EUROPEAN PATENT APPLICATION

(11) **EP 1 052 438 A2**
(43) Date of publication of application: **15.11.2000**
(21) Application number: 00304027.6
(22) Date of filing: 12.05.2000
(51) Int. Cl.: F16J 15/32

(54) **Brush seal segment with bristle damping**

(30) Priority: 14.12.1999 US 460957; 13.05.1999 US 134185 P
(71) Applicant: GENERAL ELECTRIC COMPANY, Schenectady, NY 12345 (US)
(72) Inventor: Dinc, Osman Saim, Troy, New York 12180 (US); Albers, Robert Joseph, Park Hills, Kentucky 41011 (US); Demiroglu, Mehmet, Troy, New York 12180 (US); Proctor, Robert, West Chester, Ohio 45069 (US); Aksit, Mahmut Faruk, Troy, New York 12180 (US); Battle, Michael Eugene, Forest Park, Ohio 45240 (US)
(74) Representative: Pedder, James Cuthbert

(57) **Abstract**

A brush seal segment (10) useful, when circumferentially arrayed with other similar segments (12-20), to seal the gap between a rotor and a surrounding casing of a rotary machine such as a gas or steam turbine. Brush-seal damper plates (42-48) (or at least one wire screen) is positioned between a brush-seal front plate (34) and brush-seal bristles (38) and are in contact with some of the bristles. The bristles are positioned between the damper plates (or wire screen) and a brush-seal back plate. The free end (40) of each bristle extends beyond the edges (50) of the damper plates (or wire screen) and beyond the edges of the front and back plates. The damper plates each have at least one through hole (52).

## Description

The present invention relates generally to seals, and more particularly to a brush seal segment.

Rotary machines include, without limitation, turbines for steam turbines and compressors and turbines for gas turbines. A steam turbine has a steam path which typically includes, in serial-flow relationship, a steam inlet, a turbine, and a steam outlet. A gas turbine has a gas path which typically includes, in serial-flow relationship, an air intake (or inlet), a compressor, a combustor, a turbine, and a gas outlet (or exhaust nozzle). Gas or steam leakage, either out of the gas or steam path or into the gas or steam path, from an area of higher pressure to an area of lower pressure, is generally undesirable. For example, gas-path leakage in the turbine or compressor area of a gas turbine, between the rotor of the turbine or compressor and the circumferentially surrounding turbine or compressor casing, will lower the efficiency of the gas turbine leading to increased fuel costs. Also, steam-path leakage in the turbine area of a steam turbine, between the rotor of the turbine and the circumferentially surrounding casing, will lower the efficiency of the steam turbine leading to increased fuel costs.

Annular brush seals have been proposed for use between a rotor and a surrounding casing in gas and steam turbines. The annular brush seal is made up of circumferentially-arrayed brush seal segments. Each brush seal segment is attached to the casing and includes a back (i.e., downstream) plate, a front (i.e., upstream) plate, and bristles which are positioned between the back and front plates with the free end of generally each bristle extending beyond the edges of the back and front plates. The bristles typically are canted at an angle of generally forty-five degrees in the direction of rotation of the rotor, and the free ends of the bristles are close to (and may even touch) the rotor. Typically, the front plate (and in some designs also portions of the back plate), near the free ends of the bristles, is spaced apart from the bristles to allow room for the bristles to flex and recover during transient encounters of the free ends of the bristles with the rotor. When the upstream gas flow is turbulent, some of the flow can swirl between the front plate and the bristles causing bristle flutter (i.e., instability) which quickly wears the bristles leading to premature brush seal failure. In the brush seal segment shown in US Patent 5,400,952, several circumferentially-adjoining, manually-flexible, damper shims are attached to the upstream-front of the upstream-most bristles radially between the front plate and the bristle tips. Unfortunately, attaching damper shims to the bristles, radially inward of the front plate, will stiffen the bristles resulting in unwanted wear. In another known brush seal segment, the damper shims of US Patent 5,400,952 lie against the upstream-most bristles and are radially lengthened with the radially-upper end of the damper shim being attached longitudinally between, and to, the short front plate and long back plate without otherwise being attached to the bristles. Unfortunately, turbulent gas flow would get between the damper shims and the upstream-most bristles resulting in the damper shims first fluttering and then breaking away. What is needed is a design for a brush seal segment which reduces bristle flutter in a turbulent-flow environment without the previously-described problems of known designs.

In a first expression of a first embodiment of the invention, a brush seal segment includes a back plate, a front plate, bristles, and damper plates. The bristles are positioned between the back and damper plates, and the damper plates are positioned between the bristles and the front plate. The free end of generally each bristle extends beyond the edges of the back, damper, and front plates. The damper plates near their edges are in contact with some of the bristles. The damper plates each have at least one through hole.

In a second expression of a first embodiment of the invention, a brush seal segment includes a brush-seal holder having a shape of generally an annular segment of a circular ring. The holder has an annular back plate and an annular front plate each generally coaxially aligned with the longitudinal axis of the ring and each having an inner circumferential edge generally facing the axis. The brush seal segment also includes bristles and further includes damper plates each having a radially-innermost edge. The bristles are positioned between the back and damper plates, and the damper plates are positioned between the bristles and the front plate. The free end of generally each bristle extends beyond the edges of the back, damper, and front plates. The damper plates near their edges are in contact with some of the bristles. The damper plates each have at least one through hole.

In a first expression of a second embodiment of the invention, a brush seal segment includes a back plate, a front plate, bristles, and at least one wire screen. The bristles are positioned between the back plate and the at-least-one wire screen, and the at-least-one wire screen is positioned between the bristles and the front plate. The free end of generally each bristle extends beyond the edge of the at-least-one wire screen and beyond the edges of the back and front plates. The at-least-one wire screen near its edge is in contact with some of the bristles.

In a second expression of a second embodiment of the invention, a brush seal segment includes a brush-seal holder having a shape of generally an annular segment of a circular ring. The holder has an annular back plate and an annular front plate each generally coaxially aligned with the longitudinal axis of the ring and each having an inner circumferential edge generally facing the axis. The brush seal segment also includes bristles and further includes at least one wire screen having a radially-innermost edge. The bristles are positioned between the back plate and the at-least-one wire screen, and the at-least-one wire screen is positioned between the bristles and the front plate. The free end of generally each bristle extends beyond the edge of the at-least-one wire screen and beyond the edges of the back and front plates. The at-least-one wire screen near its edge is in contact with some of the bristles.

Several benefits and advantages are derived from the invention. The damper plates (or the at-least-one wire screen) are in contact with some of the bristles thus providing dampening to the bristles in turbulent flow. As shown by engineering analysis, the at-least-one through hole in each of the damper plates (or the openings in the at-least-one wire screen) allow a subflow to pass therethrough and purge the space between the damper plates (or the at-least-one wire screen) and the bristles of turbulent flow otherwise entering that space near the free ends of the bristles such that the free ends of the bristles remain damped since they experience a more stable flow resulting in less bristle flutter and hence increased brush-seal wear.

The invention will now be described in greater detail, by way of example, with reference to the drawings, in which:
Figure 1 is a schematic front (i.e., downstream-facing) view of a first embodiment of a brush seal segment of the invention shown circumferentially arrayed with other similar brush seal segments to define an annular brush seal;
Figure 2 is a cross-sectional view of one of the brush seal segments of the brush seal of Figure 1, taken along lines 2-2 of Figure 1, showing the brush seal segment installed in a gas turbine assembly;
Figure 3 is a view as in Figure 1 but of a second embodiment of a brush seal segment of the invention; and
Figure 4, is a cross-sectional view of one of the brush seal segments of the brush seal of Figure 3, taken along lines 4-4 of Figure 3, showing the brush seal segment installed in a gas turbine assembly.

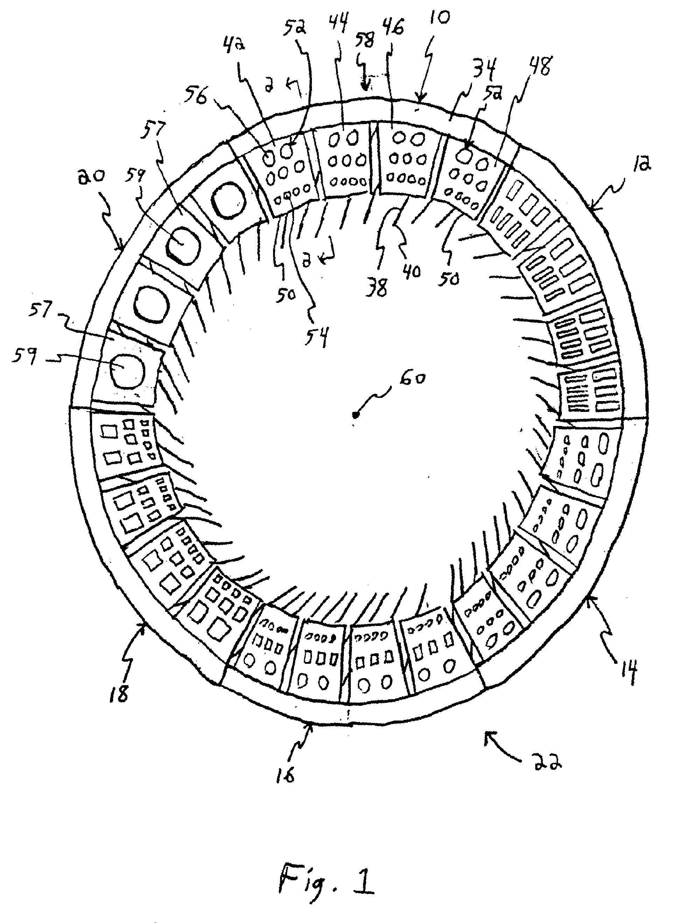

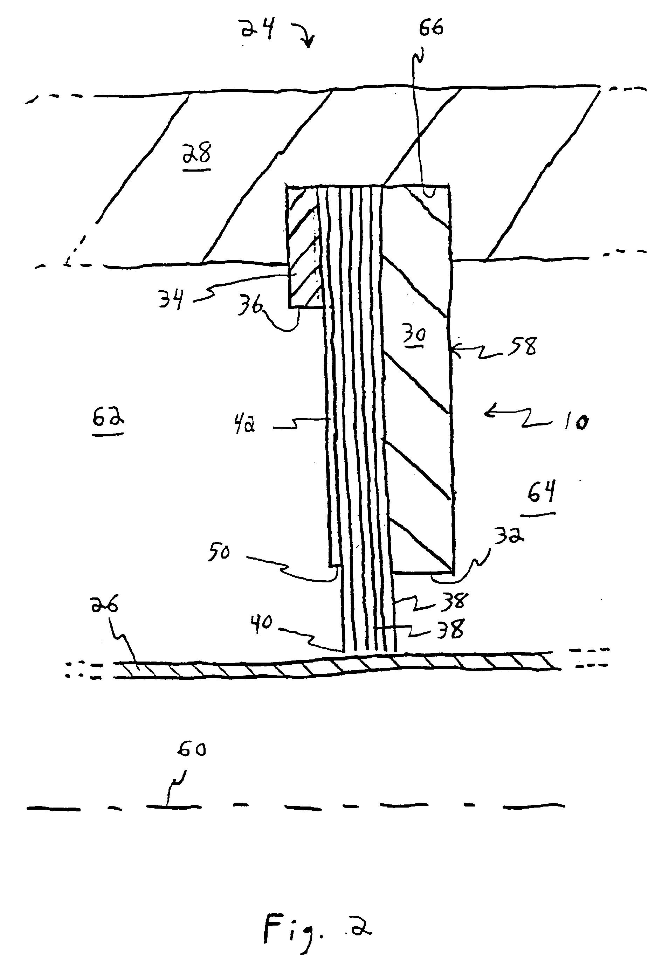

Referring now to the drawings, Figure 1 schematically shows a first embodiment of a brush seal segment 10 of the present invention together with five other similar brush seal segments 12, 14, 16, 18, and 20 all circumferentially arrayed to define an annular brush seal 22. Figure 2 shows one of the brush seal segments 10 installed in an embodiment of a gas turbine assembly 24 (only a portion of which is shown in Figure 2), such gas turbine assembly 24 having a rotor 26 and a casing 28 radially spaced apart from and circumferentially surrounding the rotor 26, such brush seal segment 10 disposed in the annular gap between the rotor 26 and the casing 28, and such brush seal segment 10 attached to the casing 28. It is noted that the brush seal segment 10 could be disposed in any other rotary machine including, without limitation, a steam turbine.

In a first expression of the first embodiment of the invention shown in Figures 1-2, a brush seal segment 10 includes a brush-seal back plate 30 having an edge 32, a brush-seal front plate 34 having an edge 36, a plurality of brush-seal bristles 38 each having a free end 40, and a multiplicity of brush-seal damper plates 42, 44, 46, and 48 each having an edge 50 and each having a thickness less than that of the front plate 34. The bristles 38 are disposed between the back and damper plates 30 and 42-48, and the damper plates 42-48 are disposed between the bristles 38 and the front plate 34, with the free end 40 of generally each bristle 38 extending beyond the edges 32, 50, and 36 of the back, damper, and front plates 30, 42-48, and 34. The damper plates 42-48 proximate their edges 50 are in contact with some of the bristles 38. The damper plates 42-48 each have at least one through hole 52.

In one construction, the damper plates 42-48 at their edges 50 are in contact with some of the bristles 38. In another construction, the damper plates 42-48 are in contact with generally all of the front-most ones of the bristles 38 (i.e., those bristles 38 closest to the front plate 34). In a further construction, the damper plates 42-48 overlap a portion of the front-most ones of the bristles 38, wherein the damper plates 42-48 contact generally the entire overlapped portion of the front-most ones of the bristles 38. In one example, the damper plates 42-48 are manually-flexible damper plates 42-48, and in another example, the front plate 34 is a manually-rigid front plate 34. By "manually-flexible" is meant that the damper plates 42-48 each can be flexed by hand by an adult person of average strength. By "manually-rigid" is meant that the front plate 34 cannot be flexed by hand by an adult person of average strength.

In one design, the at-least-one through hole 52 is an array of through holes 52, and the damper plates 42-48 include a first damper plate 42. The through holes 52 of the first damper plate 42 include a first subset of generally identical holes 54 disposed at a generally identical first distance from the edge 50 of the first damper plate 42. The through holes 52 of the first damper plate 42 also include a second subset of generally identical holes 56 disposed at a generally identical second distance from the edge 50 of the first damper plate 42. The first distance is less than the second distance. The second subset of holes 56 has a fewer number of holes than does the first subset of holes 54, and the holes 54 of the first subset have a smaller total area than the holes 56 of the second subset. This ensures that the subflow passing through the through holes 52 will flow behind the damper plates 42-48 in a radially inward direction toward the edges 50. In another design, the damper plates 42-48 of the brush seal segment 10 generally lie in a plane, and the through holes 52 are aligned generally perpendicular to the plane. For the purpose of illustration, the five other similar brush seal segments 12-20 are shown in Figure 1 with damper plates having different shaped holes, but, in many applications (not shown), the other brush seal segments 12-20 are identical to the brush seal segment 10. In other applications, the brush seal segments 10-20 are identical to brush seal segment 20 which has its damper plates 57 each having a single through hole 59 which simplifies manufacture. It is noted that the through holes 52 can have any shape including, without limitation, round, oval, rectangular, and/or square. It is further noted that, in an array of through holes, the through holes of any damper plate need not be aligned in circumferential rows and/or radial columns.

It is noted that typically a brush seal segment 10 contains many more bristles 38 than are shown in Figure 1. It is also noted that some front plates have a portion (not shown) which extends towards the edge 50 of the damper plates 42-48 and which is spaced apart from the damper plates 42-48. Typically, as seen in Figure 2, the front plate 34 extends the least (of the front, damper, and back plates) towards the free ends 40 of the bristles 38, and the back plate 30 extends the most (of the front, damper, and back plates) towards the free ends 40 of the bristles 38. In one construction, the damper plates 42-48 have a generally rectangular shape, consist essentially of a cobalt-based alloy, and are generally five-thousandths of an inch thick.

In a second expression of the first embodiment of the invention shown in Figures 1-2, a brush seal segment 10 includes a brush-seal holder 58 having a shape of generally an annular segment of a circular ring, wherein the ring has a longitudinal axis 60. The brush-seal holder 58 has an annular brush-seal back plate 30 and an annular brush-seal front plate 34 each generally coaxially aligned with the axis 50 and each having an inner circumferential edge 32 and 36 generally facing the axis 50. The brush seal segment 10 also includes a plurality of brush-seal bristles 38 each having a free end 40. The brush seal segment 10 further includes a multiplicity of brush-seal damper plates 42-48 each having a radially-innermost edge 36 and each having a thickness less than that of the front plate 34. The bristles 38 are disposed longitudinally between the back and damper plates 30 and 42-48, the damper plates 42-48 are circumferentially spaced apart, and the damper plates 42-48 are disposed longitudinally between the bristles 38 and the front plate 34, with the free end 40 of generally each bristle 38 extending beyond the edges 32, 50, and 36 of the back, damper, and front plates 30, 42-48, and 34. The damper plates 42-48 proximate their edges 50 are in contact with some of the bristles 38. The damper plates 42-48 each have an array of through holes 52.

In one construction, the damper plates 42-48 at their edges 50 are in contact with some of the bristles 38. In another construction, the damper plates 42-48 are in contact with generally all of the front-most ones of the bristles 38 (i.e., those bristles 38 closest to the front plate 34). In a further construction, the damper plates 42-48 overlap a portion of the front-most ones of the bristles 38, wherein the damper plates 42-48 contact generally the entire overlapped portion of the front-most ones of the bristles 38. In one example, the damper plates 42-48 are manually-flexible damper plates 42-48, and in another example, the front plate 34 is a manually-rigid front plate 34.

In one design, the at-least-one through hole 52 is an array of through holes 52, and the damper plates 42-48 include a first damper plate 42. The through holes 52 of the first damper plate 42 include a first subset of generally identical holes 54 disposed at a generally identical first distance from the edge 50 of the first damper plate 42. The through holes 52 of the first damper plate 42 also include a second subset of generally identical holes 56 disposed at a generally identical second distance from the edge 50 of the first damper plate 42. The first distance is less than the second distance. The second subset of holes 56 has a fewer number of holes than does the first subset of holes 54, and the holes 54 of the first subset have a smaller total area than the. holes 56 of the second subset. In another design, the through holes 52 are aligned generally parallel to the axis 60.

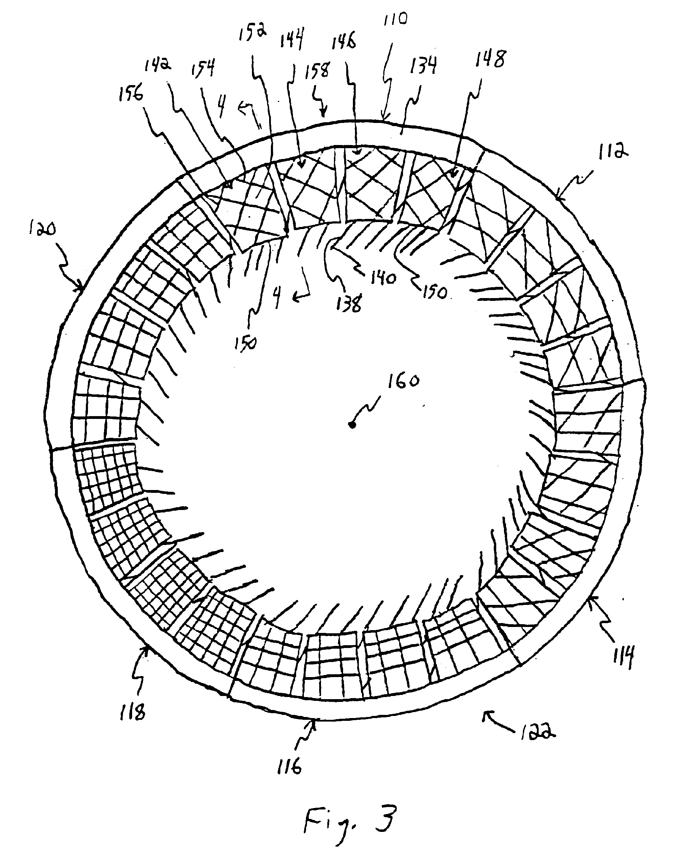

In a first expression of the second embodiment of the invention shown in Figures 3-4, a brush seal segment 110 includes a brush-seal back plate 130 having an edge 132, a brush-seal front plate 134 having an edge 136, a plurality of brush-seal bristles 138 each having a free end 140, and at least one wire screen 142, 144, 146, and 148 having an edge 150 and having a thickness less than that of the front plate 134. The bristles 138 are disposed between the back plate 130 and the at-least-one wire screen 142-148, and the at-least-one wire screen 142-148 is disposed between the bristles 138 and the front plate 134, with the free end 140 of generally each bristle 138 extending beyond the edge 150 of the at-least-one wire screen 142-148 and beyond the edges 132 and 136 of the back and front plates 130 and 134. The at-least-one wire screen 142-148 proximate its edge 150 is in contact with some of the bristles 138. It is noted that the at-least-one wire screen 142-148 has openings 152 between the screen wires.

In one construction, the at-least-one wire screen 142-148 at its edge 150 is in contact with some of the bristles 138. In another construction, the at-least-one wire screen 142-148 is in contact with generally all of the front-most ones of the bristles 138 (i.e., those bristles 138 closest to the front plate 134). In a further construction, the at-least-one wire screen 142-148 overlaps a portion of the front-most ones of the bristles 138, wherein the at-least-one wire screen 142-148 contacts generally the entire overlapped portion of the front-most ones of the bristles 138. In one example, the at-least-one wire screen 142-148 is a manually-flexible at-least-one wire screen 142-148, and in another example, the front plate 134 is a manually-rigid front plate 134.

In one design, the at-least-one wire screen 142-148 includes adjacent first and second wire screens 142 and 144, wherein the edges 150 of the first and second wire screens 142 and 144 are generally aligned with each other. In another design, the at-least-one wire screen 142-148 is at least one woven-wire screen 142-148 having a first group of generally parallel wires 154 and a second group of generally parallel wires 156. The wires 156 of the second group are aligned generally perpendicular to the wires 154 of the first group, and the wires 154 of the first group are aligned at a generally forty-five degree angle with the edge 150 of the at-least-one wire screen 142-148. This minimizes wire loss should the edge 150 become worn. It is noted that the at-least-one wire screen 142-148 typically would contain more wires 154 and 156 than those shown in Figure 3. In one construction, the at-least-one wire screen 142-148 has a generally rectangular shape, and the wires 154 and 156 consist essentially of a cobalt-based alloy and have a diameter between generally five and ten thousandths of an inch. For the purpose of illustration, the five other similar brush seal segments 112-120 are shown in Figure 1 with wire screens having different wire arrangements, but, in many applications (not shown), the other brush seal segments 112-120 are identical to the brush seal segment 110.

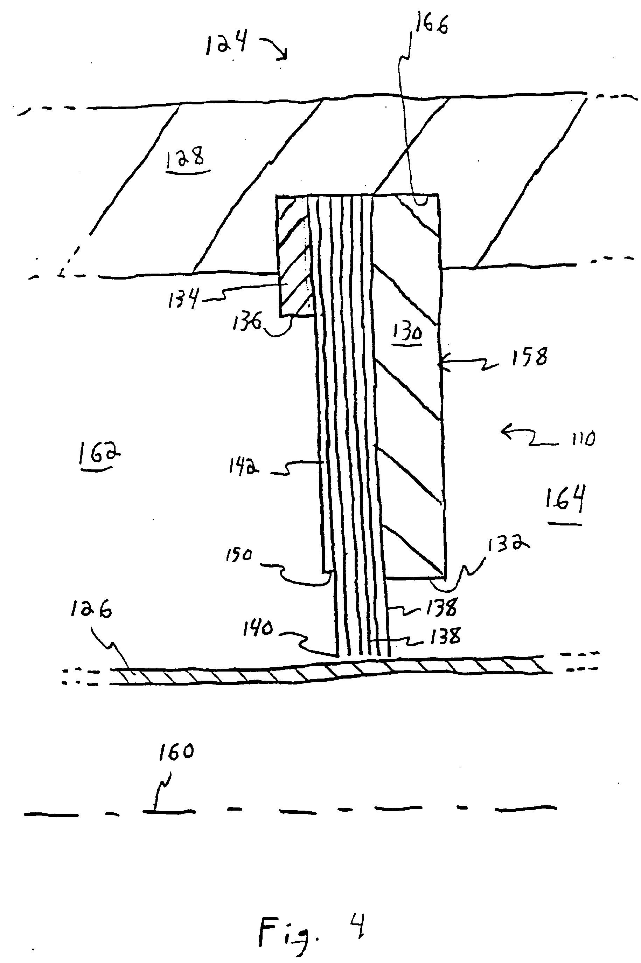

It is noted that typically a brush seal segment 110 contains many more bristles 138 than are shown in Figure 3. It is also noted that some front plates have a portion (not shown) which extends towards the edge 150 of the at-least-one wire screen 142-148 and which is spaced apart from the at-least-one wire screen 142-148. Typically, as seen in Figure 4, the front plate 134 extends the least (of the at-least-one wire screen and the front and back plates) towards the free ends 140 of the bristles 138, and the back plate 130 extends the most (of the at-least-one wire screen and the front and back plates) towards the free ends 140 of the bristles 138.

In a second expression of the second embodiment of the invention shown in Figures 3-4, a brush seal segment 110 includes a brush-seal holder 158 having a shape of generally an annular segment of a circular ring, wherein the ring has a longitudinal axis 160. The brush-seal holder 158 has an annular brush-seal back plate 130 and an annular brush-seal front plate 134 each generally coaxially aligned with the axis 150 and each having an inner circumferential edge 132 and 136 generally facing the axis 50. The brush seal segment 110 also includes a plurality of brush-seal bristles 138 each having a free end 140. The brush seal segment 110 further includes at least one wire screen 142-148 having a radially-innermost edge 136 and having a thickness less than that of the front plate 134. The bristles 138 are disposed longitudinally between the back plate 130 and the at-least-one wire screen 142-148, the at-least-one wire screen 142-148 is circumferentially spaced apart, and the at-least-one wire screen 142-148 is disposed longitudinally between the bristles 138 and the front plate 134, with the free end 140 of generally each bristle 138 extending beyond the edge 150 of the at-least-one wire screen 142-148 and beyond the edges 132 and 136 of the back and front plates 130 and 134. The at-least-one wire screen 142-148 proximate its edge 150 is in contact with some of the bristles 138.

In one construction, the at-least-one wire screen 142-148 at its edge 150 is in contact with some of the bristles 138. In another construction, the at-least-one wire screen 142-148 is in contact with generally all of the front-most ones of the bristles 138 (i.e., those bristles 138 closest to the front plate 134). In a further construction, the at-least-one wire screen 142-148 overlaps a portion of the front-most ones of the bristles 138, wherein the at-least-one wire screen 142-148 contacts generally the entire overlapped portion of the front-most ones of the bristles 138. In one example, the at-least-one wire screen 142-148 is a manually-flexible at-least-one wire screen 142-148, and in another example, the front plate 134 is a manually-rigid front plate 134.

In one design, the at-least-one wire screen 142-148 includes adjacent first and second wire screens 142 and 144, wherein the edges 150 of the first and second wire screens 142 and 144 are generally aligned with each other. In another design, the at-least-one wire screen 142-148 is at least one woven-wire screen 142-148 having a first group of generally parallel wires 154 and a second group of generally parallel wires 156. The wires 156 of the second group are aligned generally perpendicular to the wires 154 of the first group, and the wires 154 of the first group are aligned at a generally forty-five degree angle with the edge 150 of the at-least-one wire screen 142-148.

In any expression of the two embodiments of the invention shown in the figures, the bristles 38 and 138 are each canted at a generally-identical angle with respect to a corresponding radius line (not shown) extending outward (from the axis 60 and 160) to each of the bristles 38 and 138. In one example, the angle of the bristles 38 and 138 is generally forty-five degrees. In a typical construction, the back plate 30 and 130 and the front plate 34 and 134 each are of monolithic construction and consist essentially of metal or metal alloy such as, but not limited to, stainless steel. The bristles 38 and 138 typically consist essentially of metal-wire or ceramic-wire bristles such as, but not limited to, cobalt-based-alloy wire bristles. In one construction, metal-wire bristles 38 and 138 are attached to the brush-seal holder 58 and 158 by welding (such weldment omitted from the figures for clarity). As seen in Figures 2 and 4, the brush seal segment 10 and 110 has a high-pressure side 62 and 162 and a low-pressure side 64 and 164, with the radially-outward part of the brush-seal holder 58 and 158 attached to the casing 28 and 128 (such as by engagement of the brush seal segment 10 and 110 with a slot 66 and 166 in the casing 28 and 128), and with the inwardly-projecting free ends 40 and 140 (as seen in the view of Figures 2 and 4) of the bristles 38 and 138 disposed proximate (and in one application disposed as to just touch) the rotor 26 and 126. The back plate 30 and 130 is a downstream plate, and the front plate 34 and 134 is an upstream plate. Gas flow is from the high-pressure side 62 and 162 of the brush seal segment 10 and 110 to the low-pressure side 64 and 164 of the brush seal segment 10 and 110. It is noted again that the brush seal segment 10 and 110 is an annular segment of a circular ring having a longitudinal axis 60 and 160. It is herein pointed out that, for the purpose of illustration, the circular ring may be considered to be the annular brush seal 22 and 122 shown in Figures 1 and 3.

As previously noted, the damper plates (or the at-least-one wire screen) are in contact with some of the bristles thus providing dampening to the bristles in turbulent flow. As shown by engineering analysis, the at-least-one through hole in each of the damper plates (or the openings in the at-least-one wire screen) allow a subflow to pass therethrough and purge the space between the damper plates (or the at-least-one wire screen) and the bristles of turbulent flow otherwise entering that space near the free ends of the bristles such that the free ends of the bristles remain damped since they experience a more stable flow resulting in less bristle flutter and hence increased brush-seal wear

For the sake of good order, various features of the invention are set out in the following clauses:-
1. A brush seal segment (10) comprising:
   a) a brush-seal back plate (30) having an edge (32);
   b) a brush-seal front plate (34) having an edge (36);
   c) a plurality of brush-seal bristles (38 each having a free end (40), and
   d) a multiplicity of brush-seal damper plates 42-48) each having an edge (50) and each having a thickness less than that of said front plate,

   wherein said bristles are disposed between said back and damper plates and said damper plates are disposed between said bristles and said front plate with said free end of generally each bristle extending beyond said edges of said back, damper, and front plates,
   wherein said damper plates proximate their edges are in contact with some of said bristles, and wherein said damper plates each have at least one through hole (52).
2. The brush seal segment of claim 1, wherein said damper plates are manually flexible damper plates.
3. The brush seal segment of clause 2, wherein said front plate is a manually-rigid front plate.
4. The brush seal segment of clause 3, wherein said at-least-one through hole is an array of through holes (52), wherein said damper plates include a first damper plate (42), wherein said through holes of said first damper plate include a first subset of generally identical holes (54) disposed at a generally identical first distance from said edge of said first damper plate and a second subset of generally identical holes (56) disposed at a generally identical second distance from said edge of said first damper plate, wherein said first distance is less than said second distance, wherein said second subset has a fewer number of holes than does said first subset, and wherein said holes of said first subset have a smaller total area than said holes of said second subset.
5. The brush seal segment of clause 4, wherein said damper plates generally lie in a plane, and wherein said through holes are aligned generally perpendicular to said plane.
6. A brush seal segment (10) comprising:
   a) a brush-seal holder (58) having a shape of generally an annular segment of a circular ring, wherein said ring has a longitudinal axis (60), and wherein said holder has an annular brush-seal back plate (30) and an annular brush-seal front plate (34) each generally coaxially aligned with said axis and each having an inner circumferential edge (32 and 36) generally facing said axis;
   b) a plurality of brush-seal bristles (38) each having a free end (40); and
   c) a multiplicity of brush-seal damper plates (42-48) each having a radially-innermost edge (50) and each having a thickness less than that of said front plate,

   wherein said bristles are disposed between said back and damper plates, wherein said damper plates are circumferentially spaced apart, and wherein said damper plates are disposed between said bristles and said front plate, and with said free end of generally each bristle extending beyond said edges of said back, damper, and front plates,
   wherein said damper plates proximate their edges are in contact with some of said bristles, and wherein said damper plates each have at least one through hole (52).
7. The brush seal segment of clause 6, wherein said damper plates are manually-flexible damper plates.
8. The brush seal segment of clause 7, wherein said front plate is a manually-rigid front plate.
9. The brush seal segment of clause 8, wherein said at-least-one through hole is an array of through holes (52), wherein said damper plates include a first damper plate (42), wherein said holes of said first damper plate include a first subset of generally identical holes (54) disposed at a generally identical first radial distance from said edge of said first damper plate and a second subset of generally identical holes (56) disposed at a generally identical second radial distance from said edge of said first damper plate, wherein said first radial distance is less than said second radial distance, wherein said second subset has a fewer number of holes than does said first subset, and wherein said holes of said first subset have a smaller total area than said holes of said second subset.
10. The brush seal segment of clause 9, wherein said through holes are aligned generally parallel to said axis.
11. A brush seal segment (110) comprising: a) a brush-seal back plate (130) having an edge (132); b) a brush-seal front plate (134) having an edge (136); c) a plurality of brush-seal bristles (138) each having a free end (140), and d) at least one wire screen (142-148) having an edge (150),
   wherein said bristles are disposed, between said back plate and said at-least-one wire screen and said at-least-one wire screen is disposed between said bristles and said front plate with said free end of generally each bristle extending beyond said edge of said at-least-one wire screen and beyond said edges of said back and front plates, and
   wherein said at-least-one wire screen proximate its edge is in contact with some of said bristles.
12. The brush seal segment of clause 11, wherein said at-least-one wire screen is a manually-flexible at least one wire screen.
13. The brush seal segment of clause 12, wherein said front plate is a manually-rigid front plate.
14. The brush seal segment of clause 13, wherein said at-least-one wire screen includes adjacent first and second wire screens 142 and 144, and wherein said edges of said first and second wire screens are generally aligned with each other.
15. The brush seal segment of clause 13, wherein said at-least-one wire screen is at least one woven-wire screen having a first group of generally parallel wires (154) and a second group of generally parallel wires (156), wherein said wires of said second group are aligned generally perpendicular to said wires of said first group, and wherein said wires of said first group are aligned at a generally forty-five degree angle with said edge of said at-least-one wire screen.
16. A brush seal segment (110) comprising:
   a) a brush-seal holder (158) having a shape of generally an annular segment of a circular ring, wherein said ring has a longitudinal axis (160), and wherein said holder has an annular brush-seal back plate (130) and an annular brush-seal front plate (134) each generally coaxially aligned with said axis and each having an inner circumferential edge (132 and 136) generally facing said axis;
   b) a plurality of brush-seal bristles (138) each having a free end (140); and
   c) at least one wire screen (142-148) having a radially-innermost edge (150),

   wherein said bristles are disposed between said back plate and said at-least-one wire screen, and wherein said at-least-one wire screen is disposed between said bristles and said front plate, and with said free end of generally each bristle extending beyond said edge of said at-least-one wire screen and beyond said edges of said back and front plates; and
   wherein said at-least-one wire screen proximate its edge is in contact with some of said bristles.
17. The brush seal segment of clause 16, wherein said at-least-one wire screen is a manually- flexible at least one wire screen.
18. The brush seal segment of clause 17, wherein said front plate is a manually-rigid front plate.
19. The brush seal segment of clause 18, wherein said at-least-one wire screen includes adjacent first and second wire screens 142 and 144), and wherein said edges of said first and second wire screens are generally aligned with each other.
20. The brush seal segment of clause 18, wherein said at-least-one wire screen is at least one woven-wire screen having a first group of generally parallel wires (154) and a second group of generally parallel wires (156), wherein said wires of said second group are aligned generally perpendicular to said wires of said first group, and wherein said wires of said first group are aligned at a generally forty-five degree angle with said edge of said at-least-one wire screen.

## Claims

1. A brush seal segment (10) comprising:
a) a brush-seal back plate (30) having an edge (32);
b) a brush-seal front plate (34) having an edge (36);
c) a plurality of brush-seal bristles (38 each having a free end (40), and
d) a multiplicity of brush-seal damper plates 42-48) each having an edge (50) and each having a thickness less than that of said front plate,
wherein said bristles are disposed between said back and damper plates and said damper plates are disposed between said bristles and said front plate with said free end of generally each bristle extending beyond said edges of said back, damper, and front plates,
wherein said damper plates proximate their edges are in contact with some of said bristles, and wherein said damper plates each have at least one through hole (52).

2. A brush seal segment (10) comprising:
a) a brush-seal holder (58) having a shape of generally an annular segment of a circular ring, wherein said ring has a longitudinal axis (60), and wherein said holder has an annular brush-seal back plate (30) and an annular brush-seal front plate (34) each generally coaxially aligned with said axis and each having an inner circumferential edge (32 and 36) generally facing said axis;
b) a plurality of brush-seal bristles (38) each having a free end (40); and
c) a multiplicity of brush-seal damper plates (42-48) each having a radially-innermost edge (50) and each having a thickness less than that of said front plate,
wherein said bristles are disposed between said back and damper plates, wherein said damper plates are circumferentially spaced apart, and wherein said damper plates are disposed between said bristles and said front plate, and with said free end of generally each bristle extending beyond said edges of said back, damper, and front plates,
wherein said damper plates proximate their edges are in contact with some of said bristles, and
wherein said damper plates each have at least one through hole (52).

3. The brush seal segment of claim 1 or 2, wherein said damper plates are manually-flexible damper plates.

4. The brush seal segment of claim 1, 2 or 3 wherein said front plate is a manually-rigid front plate.

5. The brush seal segment of claim 4, wherein said at-least-one through hole is an array of through holes (52), wherein said damper plates include a first damper plate (42), wherein said through holes of said first damper plate include a first subset of generally identical holes (54) disposed at a generally identical first distance from said edge of said first damper plate and a second subset of generally identical holes (56) disposed at a generally identical second distance from said edge of said first damper plate, wherein said first distance is less than said second distance, wherein said second subset has a fewer number of holes than does said first subset, and wherein said holes of said first subset have a smaller total area than said holes of said second subset.

6. A brush seal segment (110) comprising:
a) a brush-seal back plate (130) having an edge (132);
b) a brush-seal front plate (134) having an edge (136);
c) a plurality of brush-seal bristles (138) each having a free end (140), and
d) at least one wire screen (142-148) having an edge (150),
wherein said bristles are disposed, between said back plate and said at-least-one wire screen and said at-least-one wire screen is disposed between said bristles and said front plate with said free end of generally each bristle extending beyond said edge of said at-least-one wire screen and beyond said edges of said back and front plates, and
wherein said at-least-one wire screen proximate its edge is in contact with some of said bristles.

7. A brush seal segment (110) comprising:
a) a brush-seal holder (158) having a shape of generally an annular segment of a circular ring, wherein said ring has a longitudinal axis (160), and wherein said holder has an annular brush-seal back plate (130) and an annular brush-seal front plate (134) each generally coaxially aligned with said axis and each having an inner circumferential edge (132 and 136) generally facing said axis;
b) a plurality of brush-seal bristles (138) each having a free end (140); and
c) at least one wire screen (142-148) having a radially-innermost edge (150),
wherein said bristles are disposed between said back plate and said at-least-one wire screen, and wherein said at-least-one wire screen is disposed between said bristles and said front plate, and with said free end of generally each bristle extending beyond said edge of said at-least-one wire screen and beyond said edges of said back and front plates; and
wherein said at-least-one wire screen proximate its edge is in contact with some of said bristles.

8. The brush seal segment of claim 6 or 7, wherein said at-least-one wire screen is a manually-flexible at least one wire screen.

9. The brush seal segment of claim 6, 7 or 8, wherein said front plate is a manually-rigid front plate.

10. The brush seal segment of claim 9, wherein said at-least-one wire screen includes adjacent first and second wire screens (142) and (144), and wherein said edges of said first and second wire screens are generally aligned with each other.
